# EUROPEAN PATENT APPLICATION

(11) **EP 4 483 981 A1**
(43) Date of publication of application: **01.01.2025**
(21) Application number: 22935528.4
(22) Date of filing: 31.03.2022
(51) Int. Cl.: B01D 21/18

(54) **SLUDGE TREATMENT DEVICE**

(71) Applicant: Suido Kiko Kaisha, Ltd., Tokyo 156-0054 (JP)
(72) Inventor: KITAMURA, Akihiro, Tokyo 156-0054 (JP); HASHIMOTO, Nobuyuki, Tokyo 156-0054 (JP); YOSHIDA, Yusuke, Tokyo 156-0054 (JP)
(74) Representative: Richardt Patentanwälte PartG mbB
(86) International application number: PCT/JP2022/016878
(87) International publication number: WO 2023/188390

(57) **Abstract**

[Object] To provide a new sludge treatment device that prevents a power transmission member from falling off from wheels due to loosening of the power transmission member.

[Solution] A pair of wheels 4a and 4b are disposed vertically. A chain 5 is wound around the pair of wheels 4a and 4b, and extends therebetween in upper and lower lines. A carriage 2 is disposed so as to be movable forward between the pair of wheels 4a and 4b. The carriage 2 includes a raising and lowering scraper 2a configured to draw sludge, and a carriage wheel 2b placed on a rail 3. A pulling portion is provided at a part of the chain 5. A plurality of engagement portions are provided at the carriage 2, and have a shape in which a pulling portion 5a moving rotationally along the chain 5 is engageable and disengageable.

## Description

### TECHNICAL FIELD

The present invention relates to a sludge treatment device configured to treat sludge settled in a water tank, and more specifically, to a forward movement mechanism of a carriage equipped with a raising and lowering scraper configured to draw sludge.

### BACKGROUND ART

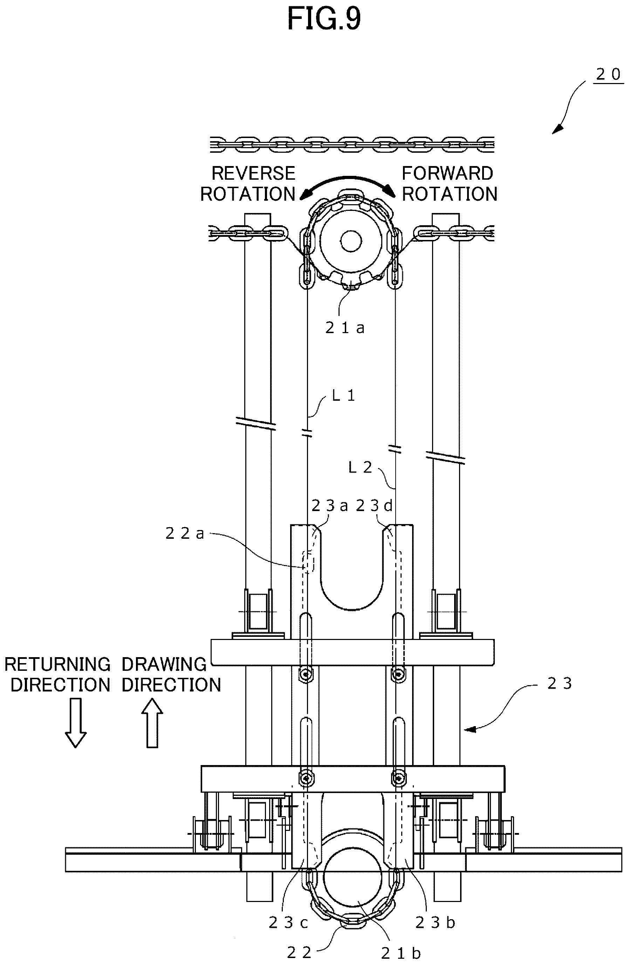

As one of the existing sludge treatment devices configured to treat sludge settled in a water tank, what is called a chain-type pulling system is known. The chain-type pulling system is configured to draw sludge by pulling a raising and lowering scraper-equipped carriage with a link chain. For example, Patent Literature 1 discloses a sludge treatment device configured to cause the forward movement of a carriage equipped with a raising and lowering scraper configured to draw sludge settled on the bottom of a water tank. Specifically, as illustrated in FIG. 9, in this sludge treatment device 20, a pair of wheels 21a and 21b are disposed horizontally, i.e., main surfaces thereof are disposed parallel to the ground, and an endless chain 22 is wound around them. This chain 22 is provided at a part thereof with a pulling portion 22a that projects in a pin shape. A sludge drawing machine 23 is disposed so as to be movable forward between the wheels 21a and 21b. The sludge drawing machine 23 includes four engagement portions 23a to 23d that are engageable and disengageable with respect to the pulling portion 22a moving rotationally along the chain 22. At the time of forward rotation of a driving wheel 21a, the engagement portions 23a and 23b are alternatively engaged with the pulling portion 22a, and the sludge drawing machine 23 moves forward in the state of the forward rotation. At the time of reverse rotation of the driving wheel 21a, the engagement portions 23c and 23d are alternatively engaged with the pulling portion 22a, and the sludge drawing machine 23 moves forward in the state of the reverse rotation. Further, by performing switching between the forward rotation and the reverse rotation of the driving wheel 21a, the traveling direction of the sludge drawing machine 23 can be reversed at a desired position on the way of traveling.

Patent Literature 2 discloses a flight-type sludge scraping machine as illustrated in FIG. 10, although this is not of a chain-type pulling type. The flight-type sludge scraping machine does not pull a scraper-equipped carriage with an endless chain. Instead, a plurality of flights are directly attached to a chain at regular intervals, and sludge on the bottom of a pond is scraped into a sludge pit by a sequence of the flights positioned at a lower chain moving from a driven shaft toward a drive shaft. Also, Patent Literature 2 describes that a constant tension force is applied to the endless chain by a tension force application mechanism provided on the driven shaft side, thereby attempting to achieve stable running of the sludge scraping machine and reduce the frequency of maintenance caused by loosening of the chain, and thereby reducing a space in the height direction.

### RELATED ART LITERATURE

### PATENT LITERATURE

Patent Literature 1: Japanese Patent No. 6814297
Patent Literature 2: Japanese Laid-Open Patent Application No. 2021-137781

### SUMMARY OF THE INVENTION

### PROBLEMS TO BE SOLVED BY THE INVENTION

In the sludge treatment device according to Patent Literature 1 mentioned above, because the pair of wheels are disposed horizontally, there is a problem that the chain (power transmission member) wound around the pair of wheels is likely to fall off from the wheels due to loosening of the chain over time. This is because the chain's own weight acts in the vertical direction while the chain is wound in the horizontal direction in the wheels. In this regard, Patent Literature 2 mentioned above describes a structure in which a pair of wheels are disposed vertically. However, the described structure is of a flight type in which a plurality of flights are directly attached to the chain that moves rotationally. When a carriage is directly attached to the chain instead of the flights, the forward movement function of the carriage cannot be achieved without performing switching between the forward rotation and the reverse rotation of the driving wheel.

Therefore, it is an object of the present invention to provide a new sludge treatment device that involves no degradation in the forward movement function of the carriage and prevents the power transmission member from falling off from the wheels due to loosening of the power transmission member.

### MEANS FOR SOLVING THE PROBLEMS

In order to solve the above-described problems, the present invention provides a sludge treatment device including: a pair of wheels; an endless power transmission member; a carriage; a pulling portion; and first to fourth engagement portions. The pair of wheels include driving wheels, and are disposed vertically. The power transmission member is wound around the pair of wheels, and extends between the pair of wheels in upper and lower lines. The carriage is disposed so as to be movable forward between the pair of wheels. This carriage includes a raising and lowering scraper configured to draw sludge, and a carriage wheel placed on a rail. A pulling portion is provided at a part of the power transmission member. The first to fourth engagement portions are provided at the carriage, and have a shape in which the pulling portion moving rotationally along the power transmission member is engageable and disengageable with respect to the first to fourth engagement portions. Here, the pair of wheels are disposed so as to be offset upward with respect to the power transmission member extending between the wheels. The first engagement portion is provided closer to one wheel of the pair of wheels and at an upper portion in the carriage, and is configured to be engaged with the pulling portion that is displaced in the upper line of the power transmission member upon rotation of one of the driving wheels, thereby pulling the carriage toward the one wheel. Engagement of the first engagement portion with the pulling portion is released upon rising of the pulling portion with respect to the first engagement portion near the one wheel. The second engagement portion is provided closer to another wheel of the pair of wheels and at a lower portion in the carriage, and is configured to be engaged with the pulling portion that is displaced in the lower line of the power transmission member upon rotation of the one of the driving wheels, thereby pulling the carriage toward the another wheel. Engagement of the second engagement portion with the pulling portion is released upon rising of the pulling portion with respect to the second engagement portion near the another wheel. The third engagement portion is provided closer to the another wheel of the pair of wheels and at an upper portion in the carriage, and is configured to be engaged with the pulling portion that is displaced in the upper line of the power transmission member upon rotation of another of the driving wheels, thereby pulling the carriage toward the another wheel. Engagement of the third engagement portion with the pulling portion is released upon rising of the pulling portion with respect to the third engagement portion near the another wheel. The fourth engagement portion is provided closer to the one wheel of the pair of wheels and at a lower portion in the carriage, and is configured to be engaged with the pulling portion that is displaced in the lower line of the power transmission member upon rotation of the another of the driving wheels, thereby pulling the carriage toward the one wheel. Engagement of the fourth engagement portion with the pulling portion is released upon rising of the pulling portion with respect to the fourth engagement portion near the one wheel.

In the present invention, preferably, the second engagement portion is provided at a position closer to the another wheel than is the third engagement portion, and the fourth engagement portion is provided at a position closer to the one wheel than is the first engagement portion.

In the present invention, a first movable guide member and a second movable guide member may be provided. The first movable guide member is fixed to the carriage, and is configured to guide the power transmission member such that the upper line of the power transmission member is horizontal. The second movable guide member is fixed to the carriage at a position lower than the first movable guide member, and is configured to guide the power transmission member such that the lower line of the power transmission member is horizontal. In this case, preferably, the first and third engagement portions are provided in the first movable guide member, and the second and fourth engagement portions are provided in the second movable guide member.

In the present invention, a first fixed guide member and a second fixed guide member may be provided. The first fixed guide member is fixed to a framework at a position lower than the first movable guide member and higher than the second movable guide member, and is configured to guide the power transmission member such that the upper line of the power transmission member is horizontal. The second fixed guide member is fixed to the framework at a position lower than the second movable guide member, and is configured to guide the power transmission member such that the lower line of the power transmission member is horizontal. In this case, preferably, the first and second movable guide members are fixed to the carriage in a cantilever manner at one side portions thereof, and the first and second fixed guide members are fixed to the framework in a cantilever manner at side portions thereof opposite to the one side portions.

### ADVANTAGEOUS EFFECTS OF THE INVENTION

According to the present invention, by disposing the pair of wheels vertically, the winding direction of the power transmission member in the wheels can be aligned to the vertical direction in which the power transmission member's own weight acts. Thereby, even if the power transmission member loosens, the power transmission member can be successfully prevented from falling off from the wheels. Also, the pair of wheels are disposed so as to be offset upward with respect to the power transmission member extending therebetween, and the engagement thereof with the engagement portion is released upon rising of the pulling portion near the wheels. Thereby, the forward movement of the carriage can be achieved with the driving wheel being rotated in one direction, i.e., without performing switching between the forward rotation and the reverse rotation of the driving wheel.

### BRIEF DESCRIPTION OF THE DRAWINGS

[FIG. 1] FIG. 1 is a side view of a chain-type pulling sludge treatment device.
[FIG. 2] FIG. 2 is a view illustrating a support structure of a guide member.
[FIG. 3] FIG. 3 is a top view of a chain.
[FIG. 4] FIG. 4 is a view illustrating a configuration of an engagement portion.
[FIG. 5] FIG. 5 is a view illustrating a state of engagement between a pulling portion and the engagement portion.
[FIG. 6] FIG. 6 is an explanatory view of how a carriage moves.
[FIG. 7] FIG. 7 is an explanatory view of how the carriage moves.
[FIG. 8] FIG. 8 is an explanatory view of how the carriage moves.
[FIG. 9] FIG. 9 is a top view of an existing sludge treatment device.

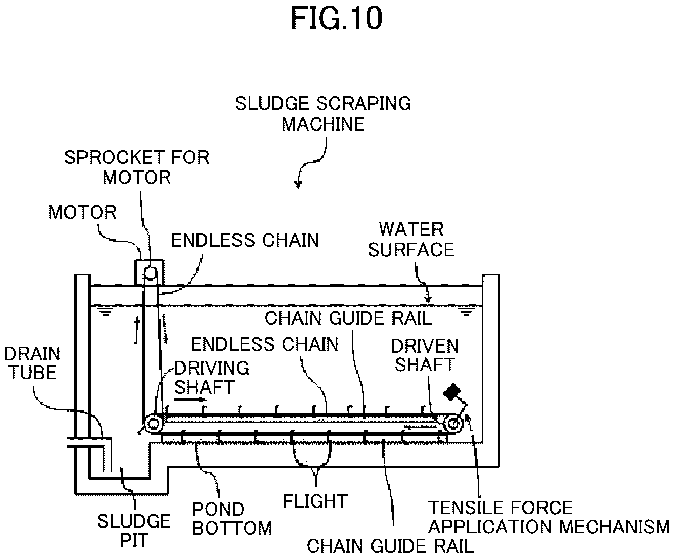

[FIG. 10] FIG. 10 is a schematic explanatory view of an existing sludge treatment device.

### DETAILED DESCRIPTION OF THE INVENTION

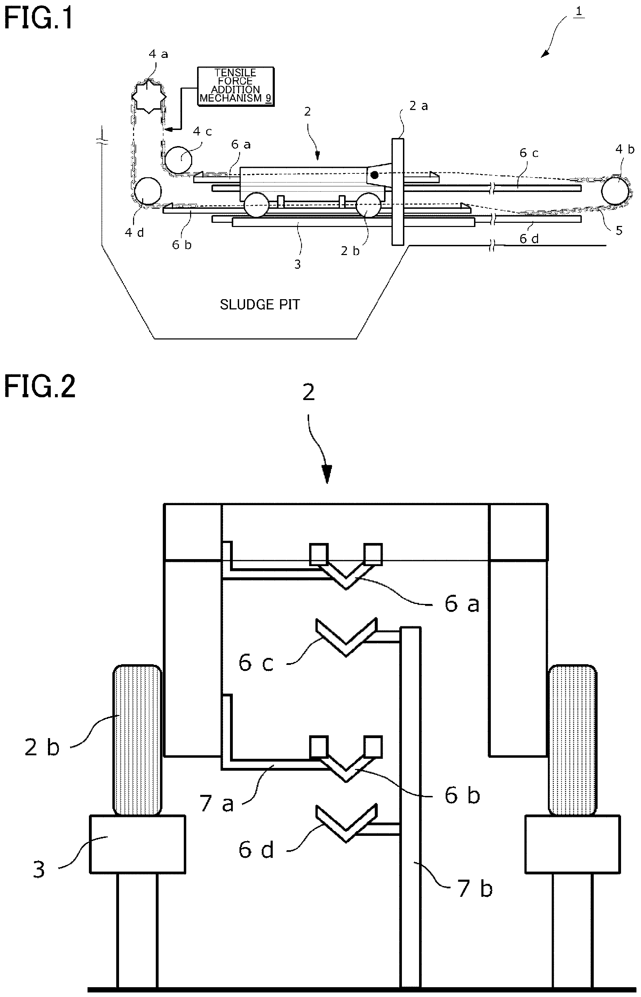

FIG. 1 is a side view of a chain-type pulling sludge treatment device according to the present embodiment. The sludge treatment device 1 is disposed at the bottom of a water tank for holding treatment target water. The sludge treatment device 1 is configured to draw and drain sludge settled in the water tank with a scraper 8. The sludge treatment device 1 mainly includes a carriage 2, rails 3, a pair of wheels 4a and 4b, a chain 5 serving as a power transmission member, and a plurality of guide members 6a to 6d.

The carriage 2 includes a raising and lowering scraper 2a configured to draw sludge, and four carriage wheels 2b. The scraper 2a is raised and lowered using a mechanical link mechanism or power supplied from a motor or the like. In the former case, a slide portion that is slidable within a predetermined range with respect to a base portion is provided as a part of the carriage 2, and a horizontal movement of the slide portion occurring in response to pulling of the chain 5 is converted into a rotational movement via the link mechanism, thereby raising and lowering the scraper 2a. A specific configuration thereof is described in, for example, Patent Literature 1, which can be referred to if necessary. The plurality of carriage wheels 2b are placed on a pair of rails 3 that are parallel to each other. Thereby, the carriage 2 is smoothly moved in the horizontal direction. The rails 3 are installed on a framework (disposition surface) at which the sludge treatment device 1 is disposed. The rails 3 extend over substantially the entire movable range of the carriage 2. At one end of the rail 3, i.e., at a terminal end in the drawing direction at which the scraper 2a is in a lowered state, a sludge pit formed by depressing the bottom of the water tank is provided.

The pair of wheels 4a and 4b are disposed near both ends of the rails 3, which define the movable range of the carriage 2. The wheels 4a and 4b are disposed vertically, i.e., in a direction in which main surfaces of the wheels 4a and 4b are perpendicular to the ground. The driving wheel 4a is disposed at the terminal end in the drawing direction (left-hand end in the drawing). The driving wheel 4a rotates both forward and reverse by an unillustrated driving source. Meanwhile, the driven wheel 4b is disposed at a terminal end in the returning direction (right-hand end in the drawing) at which the scraper 2a is in a raised state. However, from the viewpoint of transmitting power to the carriage 2, the positions of the wheels 4a and 4b may be reversed, and the driving wheel 4a may be disposed at the terminal end in the returning direction. The wheels 4a and 4b are disposed so as to be offset upward with respect to the height of the chain 5 extending between them. Although described below in detail, this intentionally creates a state in which the chain 5, more specifically, a pulling portion 5a described below, is raised near the wheels 4a and 4b.

Near the terminal end on the driving wheel 4a side, two auxiliary wheels 4c and 4d are disposed at different heights. Thereby, the upper and lower lines of the chain 5 extending in the horizontal direction rise in the vertical direction from the auxiliary wheels 4c and 4d. Then, the chain 5 is wound around the driving wheel 4a disposed at a position higher than the auxiliary wheels 4c and 4d. In order to reduce loosening of the chain 5 over time, a tensile force addition mechanism 9 configured to add a predetermined tensile force to the chain 5 is provided at a portion where the chain 5 is rising.

Meanwhile, at the terminal end on the driven wheel 4b side, the driven wheel 4b is disposed at a high position without such auxiliary wheels on the driving wheel 4a side. Thereby, the chain 5 is wound around the driven wheel 4b while gradually rising as the chain 5 approaches the driven wheel 4b. Auxiliary wheels may be provided on the driven wheel 4b side as in the case of the driving wheel 4a side, thereby raising the chain 5 from the auxiliary wheels.

The plurality of guide members 6a to 6d guide the chain 5 such that the chain 5 extending between the pair of wheels 4a and 4b is horizontal, in other words, such that the loosened chain 5 does not interfere with other members. As the guide members 6a to 6d, for example, a V-shaped angular member extending in one direction (horizontal direction) can be used so as to avoid deviation of the chain 5 housed therein.

Here, the upper movable guide member 6a is disposed at an upper portion in the carriage 2 (at the highest position among the guide members 6a to 6d), and guides the chain 5 such that the upper line of the chain 5 is horizontal. The lower movable guide member 6b is disposed at a position lower than the upper movable guide member 6a, and guides the chain 5 such that the lower line of the chain 5 is horizontal. The movable guide members 6a and 6b are fixedly attached to the carriage 2 and move integrally with the carriage 2.

Meanwhile, the upper fixed guide member 6c is disposed at a position lower than the upper movable guide member 6a and higher than the lower movable guide member 6b. This fixed guide member 6c guides the chain 5 such that the upper line of the chain 5 is horizontal in a region in which the upper movable guide member 6a is not positioned. Also, the lower fixed guide member 6d is disposed at a position lower than the lower movable guide member 6b (at the lowest position among the guide members 6a to 6d), and guides the chain 5 such that the lower line of the chain 5 is horizontal. The fixed guide members 6c and 6d are not moved like the movable guide members 6a and 6b, and are fixedly attached to the framework.

The upper movable guide member 6a extends so as to project from the front and the rear of the carriage 2 by predetermined lengths. Also, the lower movable guide member 6b projects from the front and the rear of the carriage 2 by projecting lengths that are longer than those of the upper movable guide member 6a. Meanwhile, the upper and lower fixed guide members 6c and 6d extend to cover substantially the entirety of the chain 5 that is wound around the pair of wheels 4a and 4b.

FIG. 2 is a view illustrating a support structure of the guide members 6a to 6d. As described above, the movable guide members 6a and 6b move integrally with the carriage 2. Thus, it is necessary to prevent physical interference with the fixed guide members 6c and 6d attached to the framework. Therefore, the movable guide members 6a and 6b are fixed to the carriage 2 in a cantilever manner via a support member 7a provided on one side portion thereof (left-hand side in the drawing). Meanwhile, the fixed guide members 6c and 6d are fixed to the framework in a cantilever manner via a support member 7b provided on a side portion thereof opposite the one side portion (right-hand side in the drawing).

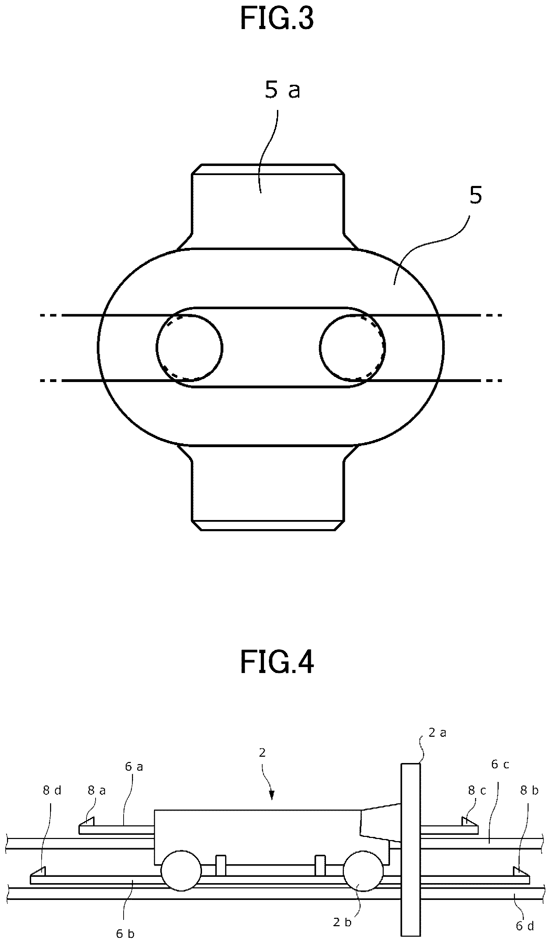

FIG. 3 is a top view of the chain 5. The pulling portion 5a having a pin shape projecting toward both side portions of the chain 5 is attached to a part of the chain 5 through welding or the like. In the side view of FIG. 1, the pulling portion 5a projects in the front and rear directions of the sheet of FIG. 1. The shape of the pulling portion 5a may be any shape as long as engagement portions 8a to 8d described below are engageable and disengageable. The shape thereof is not limited to a simple projecting shape, and may be a hook shape or the like. The pulling portion 5a moves rotationally along the chain 5 in accordance with the rotation of the driving wheel 4a.

The carriage 2 is provided with the four engagement portions 8a to 8d having a shape in which the pulling portion 5a are engageable and disengageable. As illustrated in FIG. 4, the engagement portions 8a and 8d are disposed at upper and lower portions of the front surface (left-hand surface) of the carriage 2, and the lower engagement portion 8d is at a position closer to the driving wheel 4a (left-hand side) than is the upper engagement portion 8a. In the present embodiment, the upper engagement portion 8a is provided at the left-hand end of the movable guide member 6a projecting short from the upper portion of the front surface of the carriage 2, and the lower engagement portion 8d is provided at the left-hand end of the movable guide member 6b projecting long from the lower portion of the front surface of the carriage 2.

The engagement portions 8b and 8c are disposed at upper and lower portions of the rear surface (right-hand surface) of the carriage 2, and the lower engagement portion 8b is at a position closer to the driven wheel 4b (right-hand side) than is the upper engagement portion 8c. In the present embodiment, the upper engagement portion 8c is provided at the right-hand end of the movable guide member 6a projecting short from the upper portion of the rear surface of the carriage 2, and the lower engagement portion 8c is provided at the right-hand end of the movable guide member 6b projecting long from the lower portion of the rear surface of the carriage 2.

The shape of the engagement portions 8a to 8d may be any shape as long as the pulling portions 5a are engageable and disengageable. The shape thereof may be a simple projecting shape, but may be a shape that is obliquely chamfered at the outer side as illustrated in FIG. 4. By using the latter shape, it is possible to avoid interference with the pulling portion 5a falling down in accordance with the rotational movement of the chain 5, and to enable smooth passage of the pulling portion 5a.

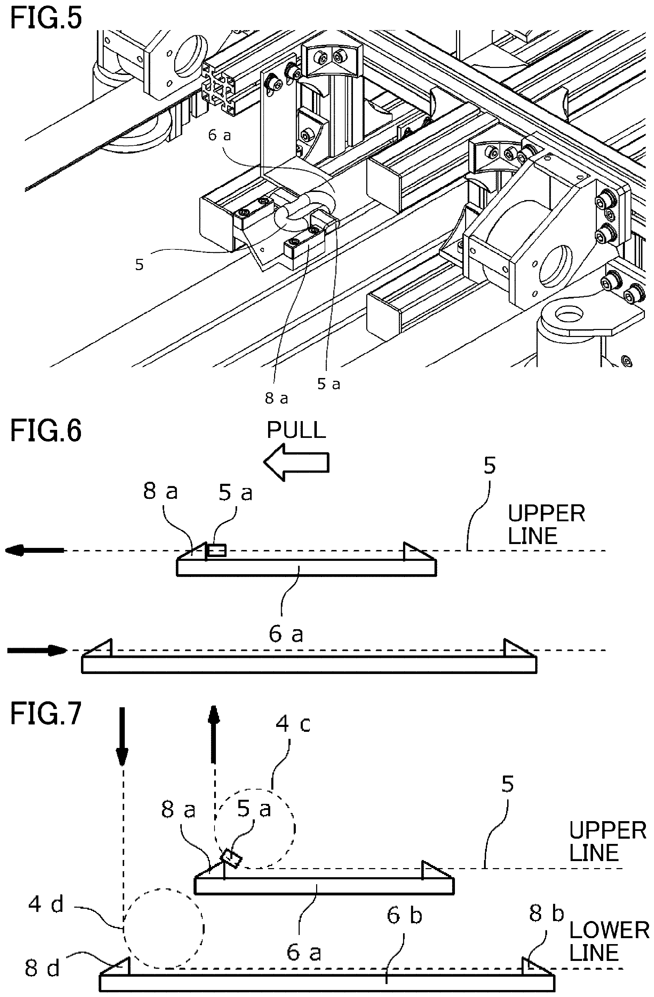

FIG. 5 is a view illustrating a state of engagement between the pulling portion 5a and the engagement portion 8a. The pulling portions 5a projecting laterally from the left and the right of the chain 5 contact the side portions of the engagement portions 8a projecting upward from both edges of the movable guide member 6a disposed so as to enclose the chain 5, thereby engaging them with each other. This engagement is released when the pulling portion 5a rises in accordance with the rotational movement of the chain 5 and exceeds the height of the projection of the engagement portion 8a. The same applies to the other engagement portions 8b to 8d.

Pulling of the carriage 2 in accordance with the rotational movement of the chain 5 will be described below with reference to FIGS. 6 to 8. First, as illustrated in FIG. 6, at the time of the forward rotation of the driving wheel 4a, the pulling portion 5a is displaced leftward in the upper line of the chain 5. In a state in which the pulling portion 5a is engaged with the left-upper engagement portion 8a, the carriage 2 is pulled leftward. Next, as illustrated in FIG. 7, as the carriage 2 approaches the left-hand terminal position, the pulling portion 5a starts to rise in accordance with the rotational movement of the auxiliary wheel 4c, and eventually exceeds the top portion of the engagement portion 8a. Thereby, the engagement with the engagement portion 8a is released, and the carriage 2 stops at the terminal position. Subsequently, the pulling portion 5a guided upward is turned back at the driving wheel 4a and guided downward. Then, the pulling portion 5a is guided to the lower line of the chain 5 in accordance with the rotational movement of the auxiliary wheel 4d. At this time, because the left-lower engagement portion 8d is offset leftward compared to the left-upper engagement portion 8a, the left-lower engagement portion 8d does not interfere with the pulling portion 5a. Then, when the pulling portion 5a displaced rightward in the lower line of the chain 5 is engaged with the right-lower engagement portion 8b, the carriage 2 starts to be displaced rightward.

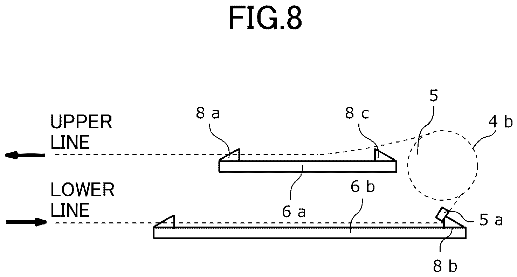

Next, as illustrated in FIG. 8, as the carriage 2 approaches the right-hand terminal position, the force to lift upward the pulling portion 5a engaged with the right-lower engagement portion 8b is gradually increased by the driven wheel 4b that is offset upward. In an initial stage, however, the engagement with the engagement portion 8b is maintained because the force to press the pulling portion 5a against the engagement portion 8b (pressing force) exceeds the force to lift upward the pulling portion 5a (lifting force). Then, when the carriage 2 reaches the left-hand terminal position, the lifting force applied to the pulling portion 5a exceeds the pressing force applied to the pulling portion 5a, thereby releasing the engagement with the engagement portion 8b. Thereby, the carriage 2 stops at the terminal position. Subsequently, the pulling portion 5a guided upward is turned back at the driven wheel 4b and guided downward. Then, the pulling portion 5a is guided to the upper line of the chain 5 without interfering with the right-upper engagement portion 8c. When the pulling portion 5a displaced leftward in the upper line of the chain 5 is engaged with the left-upper engagement portion 8a, the carriage 2 starts to be displaced leftward. As described above, at the time of the forward rotation of the driving wheel 4a, the carriage 2 moves forward in the state of the forward rotation by alternatively engaging the two engagement portions 8a and 8b with the pulling portion 5a.

Meanwhile, at the time of the reverse rotation of the driving wheel 4a, the carriage 2 moves forward in the state of the reverse rotation by alternatively engaging the two engagement portions 8c and 8d with the pulling portion 5a. This movement will be outlined below. Specifically, the right-upper engagement portion 8c illustrated in FIG. 4 is engaged with the pulling portion 5a displaced rightward in the upper line of the chain 5, and pulls the carriage 2 toward the driven wheel 4b. Upon rising of the pulling portion 5a relative to the engagement portion 8c near the driven wheel 4b, the engagement with the pulling portion 5a is released. Also, the left-lower engagement portion 8d illustrated in FIG. 4 is engaged with the pulling portion 5a displaced leftward in the lower line of the chain 5, and pulls the carriage 2 toward the driving wheel 4a. Upon rising of the pulling portion 5a relative to the engagement portion 8d near the driving wheel 4a, the engagement with the pulling portion 5a is released.

By performing switching of the driving wheel 4a between the forward rotation and the reverse rotation during the traveling of the carriage 2, it is possible to freely reverse the traveling direction of the carriage 2 at a desired position (which may be the terminal positions). With the above configuration, the sludge treatment device 1 according to the present embodiment achieves functions equivalent to those of the sludge treatment device according to Patent Literature 1 mentioned above, including the forward movement of the carriage 2 in accordance with one-directional rotation of the driving wheel 4a, and reversal of the carriage 2 during traveling.

As described above, according to the present embodiment, by disposing the pair of wheels 4a and 4b vertically, the winding direction of the chain 5 in the wheels 4a and 4b can be aligned to the vertical direction in which the own weight of the chain 5 acts. Thereby, even if the chain 5 loosens, the chain 5 can be successfully prevented from falling off from the wheels 4a and 4b due to this disposition structure.

Also, according to the present embodiment, the pair of wheels 4a and 4b are disposed so as to be offset upward with respect to the chain 5 extending between the wheels 4a and 4b, and the chain 5 is raised near the terminal positions (this rising is caused by the rotational movement of the auxiliary wheels 4c and 4d, or by the application of the lifting force). This enables the pulling portion 5a to be engaged and disengaged with respect to the engagement portions 8a to 8d. As a result, the forward movement of the carriage 2 can be achieved without performing switching between the forward rotation and the reverse rotation of the driving wheel 4a, and the traveling direction of the carriage 2 can be reversed at a desired position on the way of traveling of the carriage 2.

Also, according to the present embodiment, forward of the carriage 2, the lower engagement portion 8d is closer to the driving wheel 4a than is the upper engagement portion 8a, and rearward of the carriage 2, the lower engagement portion 8b is closer to the driven wheel 4b than is the upper engagement portion 8c. Thereby, it is possible to prevent the pulling portion 5a rotationally moving along the chain 5 from unnecessarily interfering with the engagement portions 8a to 8d, and displace the pulling portion 5a smoothly.

Also, according to the present embodiment, the engagement portions 8a and 8c are provided at the movable guide member 6a (preferably the ends thereof) configured to guide the upper line of the chain 5, and the engagement portions 8b and 8d are provided at the movable guide member 6b (preferably the ends thereof) configured to guide the lower line of the chain 5. Thereby, the pulling portion 5 rotationally moving along the chain 5 is reliably guided to the engagement portions 8a to 8d. As a result, it is possible to perform engagement and disengagement of the pulling portion 5a with respect to the engagement portions 8a to 8d regardless of deviation and loosening of the chain 5.

Further, according to the present embodiment, in addition to the movable guide members 8a and 8b, the fixed guide members 8c and 8d are also provided. Thereby, it is possible to reliably guide substantially the entirety of the chain 5 regardless of the position of the movable guide members 8a and 8b moving integrally with the carriage 2.

### REFERENCE SIGNS LIST

- 1: Sludge treatment device
- 2: Carriage
- 2a: Scraper
- 2b: Carriage wheel
- 3: Rail
- 4a-4d: Wheel
- 5: Chain
- 5a: Pulling portion
- 6a-6d: Guide member
- 7a,7b: Support member
- 8a-8d: Engagement portion
- 9: Tensile force addition mechanism

## Claims

1. A sludge treatment device, comprising:
a pair of wheels that include driving wheels, and are disposed vertically;
an endless power transmission member that is wound around the pair of wheels, and extends between the pair of wheels in upper and lower lines;
a carriage that is disposed so as to be movable forward between the pair of wheels, and includes a raising and lowering scraper configured to draw sludge and a carriage wheel placed on a rail;
a pulling portion that is provided at a part of the power transmission member; and
first to fourth engagement portions that are provided at the carriage, and have a shape in which the pulling portion moving rotationally along the power transmission member is engageable and disengageable with respect to the first to fourth engagement portions, wherein
the pair of wheels are disposed so as to be offset upward with respect to the power transmission member extending between the pair of wheels,
the first engagement portion is provided closer to one wheel of the pair of wheels and at an upper portion in the carriage, and is configured to be engaged with the pulling portion that is displaced in the upper line of the power transmission member upon rotation of one of the driving wheels, thereby pulling the carriage toward the one wheel, where engagement of the first engagement portion with the pulling portion is released upon rising of the pulling portion with respect to the first engagement portion near the one wheel,
the second engagement portion is provided closer to another wheel of the pair of wheels and at a lower portion in the carriage, and is configured to be engaged with the pulling portion that is displaced in the lower line of the power transmission member upon rotation of the one of the driving wheels, thereby pulling the carriage toward the another wheel, where engagement of the second engagement portion with the pulling portion is released upon rising of the pulling portion with respect to the second engagement portion near the another wheel,
the third engagement portion is provided closer to the another wheel of the pair of wheels and at an upper portion in the carriage, and is configured to be engaged with the pulling portion that is displaced in the upper line of the power transmission member upon rotation of another of the driving wheels, thereby pulling the carriage toward the another wheel, where engagement of the third engagement portion with the pulling portion is released upon rising of the pulling portion with respect to the third engagement portion near the another wheel, and
the fourth engagement portion is provided closer to the one wheel of the pair of wheels and at a lower portion in the carriage, and is configured to be engaged with the pulling portion that is displaced in the lower line of the power transmission member upon rotation of the another of the driving wheels, thereby pulling the carriage toward the one wheel, where engagement of the fourth engagement portion with the pulling portion is released upon rising of the pulling portion with respect to the fourth engagement portion near the one wheel.

2. The sludge treatment device according to claim 1, wherein
the second engagement portion is provided at a position closer to the another wheel than is the third engagement portion, and
the fourth engagement portion is provided at a position closer to the one wheel than is the first engagement portion.

3. The sludge treatment device according to claim 1 or 2, further comprising:
a first movable guide member that is fixed to the carriage, and configured to guide the power transmission member such that the upper line of the power transmission member is horizontal; and
a second movable guide member that is fixed to the carriage at a position lower than the first movable guide member, and is configured to guide the power transmission member such that the lower line of the power transmission member is horizontal, wherein
the first and third engagement portions are provided in the first movable guide member, and
the second and fourth engagement portions are provided in the second movable guide member.

4. The sludge treatment device according to claim 3, further comprising:
a first fixed guide member that is fixed to a framework at a position lower than the first movable guide member and higher than the second movable guide member, and is configured to guide the power transmission member such that the upper line of the power transmission member is horizontal; and
a second fixed guide member that is fixed to the framework at a position lower than the second movable guide member, and is configured to guide the power transmission member such that the lower line of the power transmission member is horizontal.

5. The sludge treatment device according to claim 4, wherein
the first and second movable guide members are fixed to the carriage in a cantilever manner at one side portions thereof, and
the first and second fixed guide members are fixed to the framework in a cantilever manner at side portions thereof opposite to the one side portions.
